# EUROPEAN PATENT SPECIFICATION

(11) **EP 3 888 241 B1**
(45) Date of publication and mention of the grant of the patent: **23.08.2023**
(21) Application number: 19816853.6
(22) Date of filing: 28.11.2019
(51) Int. Cl.: H02S 20/32

(54) **APPARATUS FOR SOLAR TRACKING**
VORRICHTUNG ZUR SOLARVERFOLGUNG
APPAREIL DE SUIVI SOLAIRE

(30) Priority: 28.11.2018 GB 201819375
(43) Date of publication of application: 06.10.2021
(73) Proprietor: Corrie Energy Partners Ltd., Haywards Heath, West Sussex RH17 6SN (GB)
(72) Inventor: DUFFIN, Anthony Roy, West Sussex RH17 6SN (GB); DUFFIN, Thomas Charles, West Sussex RH17 6SN (GB)
(74) Representative: Thoma, Maximilian Henry
(86) International application number: PCT/GB2019/053371
(87) International publication number: WO 2020/109805

(56) References cited:
- WO-A1-2009/076394
- CN-A- 102 638 194
- CN-B- 103 659 793
- DE-U1- 9 116 151
- US-A1- 2010 180 883
- US-A1- 2011 100 354

## Description

The present invention relates to an apparatus for solar tracking. The invention extends to a corresponding system.

Solar energy can be captured using a range of collector types often installed in arrays of several collectors. Some collect heat energy and some generate electricity. In all cases the broad principles are the same; an active area of collector or array of collectors is arranged so that it is struck by the beam of the sun and diffuse radiation (the latter may come though clouds). Generally the larger the area of the collectors the greater the energy captured. Generally the better the collectors are aligned perpendicular to the sun's beam the greater the energy capture.

US20100180883A1 describes an actuated feedforward controlled solar tracker system including a sub-frame supporting at least one solar panel, a post supporting the sub-frame, and a linking mechanism connecting the sub-frame and post.

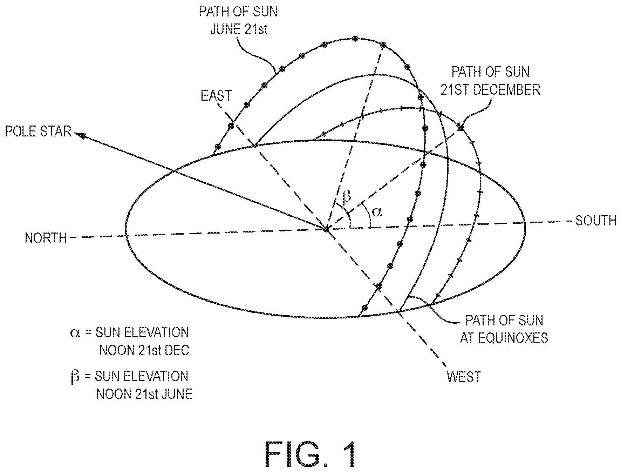

Of course the sun moves through the sky due to the rotation of the earth, the earth's axis being inclined to its orbit around the sun and the earth orbiting around the sun. The movement of the sun relative to a point on the ground is shown in Figure 1. All these result in the beam of the sun striking a fixed collector at a varying angle.

Most solar collector arrays are mounted on fixed structures for simplicity, reliability and low cost. These are called 'staring arrays' and they are sub-optimal in energy collection. The optimum angle for any collector array is such that the beam of the sun hits it perpendicular to the panel's surface. Staring arrays are aligned perfectly to the sun's beam only once or twice a year. The angle of the plane of the collector panels is generally arranged to be facing due south and inclined to the horizontal at an angle approximately the same as the latitude of its location as this compromise gives good overall generation through the year taking account of total generation and the economic value of the electricity. For example in the UK this may be the same as the angle of a house roof of about 55 degrees; at the equator, this may be parallel to the ground. Alternative angles may be chosen for a range of reasons but in all cases the fixed, staring array will be aligned perfectly to the sun's beam only once or twice a year.

This limitation means that the array does not generate all it could from the sun and it is particularly important for solar photovoltaic panels generating electricity to be fed into a commercial electricity network or grid. For example, on a clear day at sunrise and sunset the sun's beam hits the array at a very oblique angle or may even be from behind the panel and the output is very low whilst at midday the generation is highest. Similarly, in the winter when the sun is low in the sky even at midday the generation from the panels is low as the sun's beam hits the array at a non-optimum angle.

To some extent in climates with much cloud this limitation is lessened since the general diffuse radiation from the sun through the atmosphere still reaches the panels regardless of their angle. Consequently, in much of the world staring arrays are considered a sufficient arrangement for solar energy collection. In the UK and coastal parts of Europe diffuse radiation from the sun can be responsible for about 30% of the total generation.

It would be possible to increase generation if the collector or array of collectors could be moved to track the sun through the sky.

Modelling shows that, even if a staring array is optimally angled, in a perfectly clear atmosphere as much as 60% of the available solar energy is lost as the light beam does not hit the array at a perpendicular angle. This particularly applies to the 'direct' portion of sunlight reaching the array as a beam of light from the sun. If the direct beam is maintained within a cone of a small angle around a line perpendicular to the array, the available solar energy loss can be drastically reduced. For example, if the direct beam is maintained within a cone of angle of approximately 7.5 degrees around a line perpendicular to the array, only a minimal amount (around 2%) is lost.

Thus to maximise the energy captured from the sun by a solar energy system the collector array can be mounted on a mechanical framework which tracks the sun; a 'tracker'. The mechanical system moves the solar collector array so that it is continually adjusted to be optimally aimed at the sun. This is arranged so the beam of the sun is always perpendicular to the plane of the collector array. A dual axis tracking system can follow both time of year and time of day; as the sun moves through the sky through the day the system tracks the azimuth angle and it tracks elevation above the horizon through the day and the year.

Several trackers are on the market and operating around the world. The majority of trackers are deployed where there is a large amount of time with clear skies so that the direct beam of the sun can normally be seen and maintained perpendicular to the solar collector array. Such a full, dual-axis tracking system is typically claimed to gain up to 40% more energy than a static 'staring' array in situations where skies are normally clear and the horizon has little to obscure the sun. Modelling confirms this sort of gain in collection is possible however 30% might be a more reasonable expectation in a 'real-world' scenario.

In climates with much cloud where diffuse radiation from the sun can be responsible for as much as 30% of the total generation any improvement due to tracking could only give an increase to the 70% of generation. This affects the potential economic gains to be made by a tracking system. If the 30% gain figure noted above is a reasonable gain from the direct beam then this results in a potential gain of 21% of the total in a cloudy climate.

So such dual axis trackers result in gains of somewhere between 21% and 40%. These gains may be attractive if the capital costs and operating impacts of the tracker are low enough to ensure the system is still economic.

An alternative and cheaper known system (not shown) has the array mounted on a frame which can be rotated about an inclined axis - this is a single axis tracker.

This may be an array mounted on an axis oriented north-south but inclined at an angle to the horizontal. The latter angle is roughly half way between that to optimally face the sun in winter and in summer, thus at some average angle perhaps slightly biased to the season when there is generally more energy available which in the northern hemisphere is the summer. The array is then rotated each day about this axis to follow the sun's daily path. Such a system is generally claimed to gain up to 20% more energy than a static 'staring' array in a climate with little cloud.

An alternative known single axis solar tracker (not shown) may be an array mounted on a horizontal pole lined up east-west and then rotated about this pole to alter the azimuth of the panels. Such a system collects extra energy by being better aligned with respect to the sun beam throughout the year as the sun beam reaches a higher azimuth in summer and a lower azimuth in winter. For example, in the southern UK, in winter the lowest midday azimuth is about 15 degrees and in the summer it rises to about 63 degrees above the southern horizon.

Either single-axis system increases energy collection (while costing more to install and maintain), but neither matches the generation of a dual-axis tracker.

As well as a gain in total energy collected by using a tracking system for a solar photovoltaic (PV) system there is the benefit that the generation of electricity is more constant throughout the day. With a fixed system the sun's angle of incidence to the collector array varies considerably during the day as the sun passes through the sky and so the instantaneous power output varies. In the morning and evening it is at a glancing angle to the array's surface and so the transfer of energy is poor and the array's output is a very small percentage of the maximum possible from the sunlight available. As the sun reaches its zenith so the power output peaks at up to the maximum for the array. For a given single few minutes of a single day or two days in the year a fixed array is at its optimum azimuth and elevation angles and if it is sunny and cool the array produces maximum power output.

The consequence of this variability in the output through the day and year is that generation does not well match the day-long or seasonal demand for energy. Generally, throughout the year peaks occur in electricity demands in the morning and evening in temperate climates such as the UK. In sunny, hot climates there is often a late afternoon peak as air conditioning loads reach their highest. The impact of the mis-match of solar generation to peaks of demand is reflected in the tariffs paid for electricity generated from static solar arrays. These tariffs tend to reflect the lack of generation during peaks which is when electricity generally has a higher value. A tracking system will better match demand as well as improving electricity generation.

Since tracking systems cost more to install and maintain than fixed arrays it is essential that they gain the extra energy to make them economic. Generally, tracking systems are not used in the UK (and other cloudy climates) as there is not enough gain as set against the extra risks and burdens of installing, maintaining, using and decommissioning such systems. In particular, this is because the installation is substantially more difficult than that of a fixed array but the weather in countries with climates like that of the UK means there is not so much direct beam radiation from the sun to strike the solar collectors to provide the extra energy to be captured. Very large arrays in sunny climates do often use dual axis tracking systems because there is a substantial amount of energy from the direct beam of the sun.

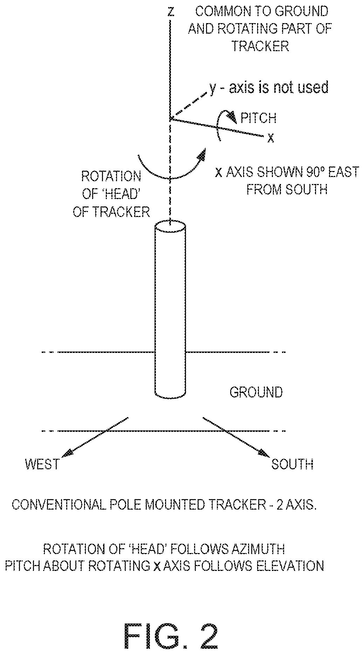

Figure 2 shows the way in which a conventional pole mounted tracker (i.e. a dual axis solar tracker) moves to track the sun. A "head" rotates about the "z" axis to follow the azimuth of the sun, where the head pitches about the "x" axis to follow the elevation of the sun. Dual axis trackers are generally not used in the UK (and other cloudy climates) partly because they tend to have a single vertical pole (on which the head is mounted) as the foundation. This requires a relatively demanding and time-consuming installation compared to a fixed array. In particular a very substantial single foundation point needs to be created as all the mechanical loads from the array are fed into the ground through this single foundation. This is typically created by an excavated hole which is filled to create a concrete plinth with a level up-stand on which the pole can be fixed. The pole and collector array then need to be mounted on this plinth and this requires either a team of people and/or a crane due to the weight of the assembly. In populous countries and in locations where there is concern about the environmental impact of such a foundation it is also often the case that permissions will not be granted for such a system. An environmental impact assessment will almost certainly be required which likely raise concerns which may need to be addressed, further adding to the burden of installing the system and reducing generation. Typically, a planning consent will require removal of the array and foundations at end of life and so this adds a further additional burden to use of the system.

In a dual axis tracker, the array is typically mounted on the pole so the centre of the array is the fixing point so the pole has to be at a height above the ground of roughly half the array height. This is so the array can tilt to its lowest elevation without touching the ground. This extra height brings at least two further disadvantages. Firstly the array is exposed to stronger winds than if mounted low to the ground and this adds to the costs of the structure required to support it. Secondly as the array is taller the array will be more visible from a distance and so this raises concerns in gaining planning consent.

Furthermore, at the top of the pole, all the forces need to be distributed from this single point into the frame supporting the array. This needs to be very substantial and so requires a great deal of material, causing difficulties in manufacture and transportation.

In addition the maintenance of tracking arrays is more burdensome than that of fixed arrays. This is because there are moving parts, sensors and control systems which all add to the component count and hence to unreliability. This means there is more time and money spent on maintaining a tracking system in working order than for a fixed array. One part of the control system that is prone to error is the sensor which determines where the array should point. This relies on being clean so it can sense the direction from which sunlight is coming so that the sun's position in the sky or the brightest part of the sky can be identified. When it gets dirty it does not function well and needs to be cleaned. Maintaining the moving parts when they are mounted on a tall pole may be a complex and risky operation.

Aspects and embodiments of the present invention are set out in the appended claims. These and other aspects and embodiments of the invention are also described herein. According to an aspect of the invention, there is provided an apparatus for solar tracking as defined by the subject-matter of claim 1, the apparatus comprising: a mount for a payload; at least three legs for supporting the mount above a foundation (or the ground); wherein at least two of the legs are (independently) linearly actuable such that, in use, the mount is capable of pivoting (and/or rotating) about at least two axes relative to the foundation (or the ground). According to an example, there is provided a dual axis solar tracker, comprising: a mount for a payload, and three legs for supporting the mount above a foundation. Providing a solar tracking apparatus having three legs (some of which are linearly actuable) may allow the implementation of a dual axis solar tracker which is easy to install and maintain.

Preferably, in use, the ends of the legs distal to the mount are fixed (optionally to the foundation or the ground) such that the distal ends can optionally pivot but cannot not translate relative to the foundation (or the ground).

Preferably, wherein each leg comprises at least one pivoting joint (i.e. a joint providing rotation about at least one axis). This may allow relative rotation of the mount relative to the legs and/or the legs relative to the foundation. In an example useful for understanding the invention, at least one of the joints preferably comprises a hinge joint; more preferably wherein one of the joints comprises a hinge joint. This may provide a limitation on the degrees of freedom of the system, which may improve stability. At least some of the joints are preferably ball joints; more preferably wherein all joints other than the joint comprising a hinge joint are ball joints.

The legs may be connected to the mount via pivoting joints. Preferably, the legs are connected to the mount via ball joints. In one example, a first leg includes a hinge joint to the ground and a ball joint to the mount; a second leg includes a ball joint to the ground and a ball joint to the mount; and a third leg includes a single ball joint (to the mount and/or to the ground). In another example, a first leg includes a plurality of hinge joint (specifically, a hinge joint to the mount; and a hinge joint (hinging in a different direction) to the ground), and a second and third leg each include a ball joint to the ground and a ball joint to the mount.

The at least three legs may consist of three legs, wherein two of the legs are linearly actuable and one of the legs is preferably of fixed length. In use, the ends of two of the legs that are distal to the mount may be connected to the foundation (or the ground) via ball joints; and the distal end of one leg may be connected to the foundation (or the ground) via a hinge joint. The leg connected via a hinge joint is preferably a linearly actuable leg. The hinge joint may be arranged such that a line defined by the hinging axis of the hinge joint is perpendicular to a line defined by the direction, from the hinge joint, of the ball joint connecting the leg of fixed length to the foundation (or the ground). This may allow the degrees of freedom of the system to be controlled so as to stabilise the apparatus and to enable the apparatus to be effectively controlled.

The linearly actuable legs are preferably longer (in their shortest state); or alternatively shorter (in their longest state); than the leg of fixed length, such that the mount is supported at an oblique angle relative to the foundation (or the ground). The oblique angle may be variable in accordance with the extension of the linearly actuable legs. This may allow energy generation to be improved by aligning a payload towards the sun.

In an example useful for understanding the invention, one of the legs may comprise a plurality of hinge joints (preferably arranged to hinge in different directions). Said plurality of hinge joints are preferably separated along the length of the leg, i.e. they do not form a universal joint.

According to the invention, one
of the legs comprises two hinge joints; preferably wherein pivoting of a first hinge joint causes the mount to pitch; and pivoting of a second hinge joint causes the mount to roll. The two hinge joints may comprise a first rotatable shaft and a second rotatable shaft respectively; wherein the first and second shafts are arranged such that the first shaft is perpendicular to the second shaft; preferably wherein the first and second shaft are connected; more preferably wherein the first shaft passes via at least one rotary bearing connected to the mount, and the second shaft passes via at least one rotary bearing connected to the foundation. The linearly actuable legs may be connected both to the mount and to the foundation via ball joints. The first shaft or the second shaft may be arranged parallel to a line defined by the distal ends of the linearly actuable legs and/or the edge of the mount.

The linearly actuable legs may be telescoping. Preferably, the linearly actuable legs comprise telescopic cylinders. This may improve the stability of the apparatus and may enable the apparatus to be effectively controlled.

The apparatus may further comprise at least one actuator for actuating the linearly actuable legs. The apparatus may further comprise a controller for controlling the at least one actuator thereby to track the sun, preferably wherein the controller comprises a clock and a memory storing information relating to the position of the sun in relation to the time of day (and optionally the time of year). Alternatively, the controller may comprise a clock and a computer program in memory for predicting the position of the sun in relation to the time of day (and optionally the time of year). Angle sensors (in communication with the controller) may be provided to allow the position of the mount to be determined. This may provide a simple and reliable control mechanism.

The apparatus may comprise a foundation. The foundation may be configured to be fixed to the ground via fixings being driven into the ground, preferably wherein said fixings are stakes. The foundation may comprise a frame formed of members. The foundation may alternatively be the ground.

In an example useful for understanding the invention, the legs may be connected to the mount away from the centre of the mount; preferably wherein the legs are connected to the mount proximate the edges of the mount.

According to the invention $
the legs are connected to the mount at the edges of the mount. The legs may be arranged in a triangular formation on the mount. The mount may be generally triangular in shape, and the legs may be connected to the mount proximate the vertices of the mount. All of the legs may be weight-bearing.

According to the invention, the $
legs are spread around the mount thereby to spread the load of the mount. The apparatus may not include a support under the centre of the mount. At least one leg may extend beyond the footprint of the mount (so as to reduce to height of that leg). The mount may be supported at an oblique angle relative to the foundation.

Relative to the foundation (or the ground), the mount is capable of pivoting about one of the legs - that is, one of the legs and/or joints forms a pivot point for the mount, preferably at a lower or upper part of the mount. Relative to the foundation (or the ground), the mount is preferably capable of pivoting about two axes, wherein more preferably, relative to the foundation (or the ground), the mount is capable of pitching thereby to track the elevation of the sun, and rolling thereby to track the azimuth of the sun.

The apparatus may be formed of a plurality of members which are fixed together.

According to another aspect of the invention, there is provided a system for solar tracking, comprising the apparatus as described herein; and a solar panel supported as a payload on the mount. According to another aspect of the invention, there is provided an installation formed of a plurality of systems as described herein.

According to another aspect not falling under the scope of the claims but useful for understanding the invention, there is provided a method of solar tracking, comprising: supporting a mount for a payload above a foundation (or the ground) using at least three legs, wherein at least two of the legs are linearly actuable; pivoting the mount about a first axis relative to the foundation (or the ground) thereby to track the elevation of the sun; and pivoting the mount about a second axis relative to the foundation thereby to track the azimuth of the sun.

An example not falling under the scope of the claims but useful for understanding the invention also provides a computer program or a computer program product for carrying out any of the methods described herein, and/or for embodying any of the apparatus features described herein, and a computer readable medium having stored thereon a program for carrying out any of the methods described herein and/or for embodying any of the apparatus features described herein.

An example not falling under the scope of the claims but useful for understanding the invention also provides a signal embodying a computer program or a computer program product for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

Any feature in one aspect of the invention may be applied to other aspects of the invention, in any appropriate combination.

As used herein, the term "foundation" preferably connotes a load bearing part of a structure that, in normal use, is the lowest load bearing part; more preferably a load bearing part of a structure that is at least semi-permanently attached to the ground. In an alternative, the term "foundation" connotes the ground.

As used herein, the term "leg" preferably connotes a supporting part of a structure; more preferably a supporting part extending all the way from a supported component to a further component supporting the leg; yet more preferably a supporting part extending all the way from a supported component to a foundation for the structure (or the ground).

As used herein, the term "payload" preferably connotes a component, system or apparatus which is configured for use in solar tracking; more preferably a component, system or apparatus comprising a solar panel.

As used herein, the term "hinge" or "hinge joint" preferably connotes a joint with one degree of freedom and/or a joint providing rotation about a single axis.

As used herein, the term "apparatus for solar tracking" should be understood to be synonymous with the terms "tracker", "solar tracker" and "array".

As used herein, the term "mount" should be understood to be synonymous with the terms "frame" and "supporting structure".

As used herein, the term "linearly actuable" should be understood to be synonymous with the term "extendable".

As used herein, the term "ball joint" should be understood to be synonymous with the term "universal joint". That is, universal joints may be used instead of ball joints in an alternative (although it will be appreciated that ball joints may provide greater freedom of motion).

The invention will now be described, purely by way of example, with reference to the accompanying drawings, in which:
Figure 1 shows the movement of the sun relative to a point on the ground;
Figure 2 shows the way in which a conventional pole mounted tracker (or a dual axis tracker) tracks the sun;
Figure 3 shows a conventional three axis system;
Figure 4 shows an apparatus for solar tracking according to one example not falling under the scope of the claims but useful for understanding the invention;
Figure 5 shows the position of the apparatus at dawn;
Figure 6 shows the position of the apparatus at midday (in winter);
Figure 7 shows the position of the apparatus at dusk;
Figure 8 shows the position of the apparatus at midday (in summer);
Figure 9 shows an alternative apparatus for solar tracking according to one example not falling under the scope of the claims but useful for understanding the invention; and
Figure 10 shows an apparatus for solar tracking according to an embodiment of the invention.

### Specific Description

The system proposed here may avoid the main disadvantages of current tracking systems using a novel approach to dual axis tracking. The system has a much-reduced installed cost compared to current systems and in particular installation is similar to that for a fixed array. It is designed to be installed using the same simple procedures used for a fixed array and without a costly, time-consuming concrete foundation and so avoids environmental damage. It may be installed onto the same type of ground stakes used for mounting a fixed array. These are driven into the ground using simple and low-cost equipment which may allow many to be installed in a day. It is designed then to be assembled into an array in the same way as a fixed array, by building a framework from simple elements which can be lifted by one person and bolted together to create the complete frame. It is designed so the individual panels can then be mounted onto the frame in the same way as for a fixed array. It is designed to be lower to the ground than other trackers so that it may be easier to reach to install the panels and to maintain when required. The low height also means lower visual impact and so less of a concern in gaining planning consent. These features may reduce cost and complexity and make the system familiar to current installers.

In addition the design has considered the cost of maintenance over the life of the tracker, and the limitations caused by the same. The parts count has been reduced where possible and those parts that have been used have been selected to be inherently reliable over the 25 year life of a solar array and cheap to replace. Many of the elements are designed to be common engineering parts for example from the automotive industry.

It does not use a light sensor for detecting the angle of the sun. Instead it uses a controller which has a time clock and contains in memory the angle of the sun for each day of each year and then uses solid-state angle sensors on the array. This avoids the cost of cleaning and maintaining a sensor.

Alternatively, rather than storing in memory the angle of the sun for each day of each year, the controller contains a computer program in memory for predicting the sun's motion through the sky for each day of each year. The computer program implements equations to compute the angle of the sun based on the current time (as provided by the time clock) and optionally the geographical location of the system.

Modelling of the system shows that with its range of tracking angles following some of the elevation and azimuth through the day and year it will gain about 30% more energy than a fixed array in the same location in the UK, Europe and other cloudy climates.

The innovative approach to the design of the proposed system has been arrived at through analysis of the degrees of freedom required of the solar collector array to enable it to track the beam of the sun. The array needs to be able to rotate about a minimum of two axes. The rotations and translations possible at each mounting have been selected so as to allow the required rotations but also avoid the concentration of loads into a single support point.

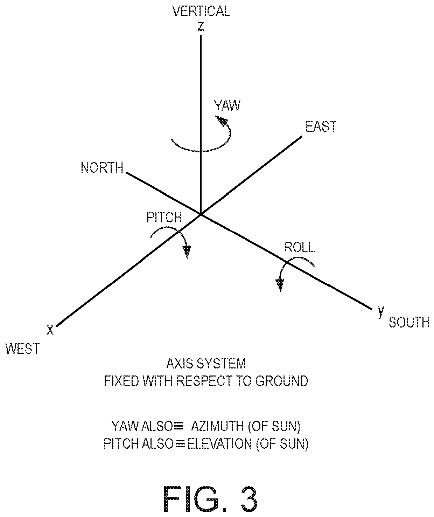

In describing the approach a conventional three axis system, as shown in Figure 3, will be referred to having x east west and y north south horizontal axes and z vertical axis with rotations of pitch about the x axis, roll about the y axis and yaw about the z axis. This axis system is fixed to the ground at the location of the array with the y axis oriented to point due south. The sun moves through the sky with changing elevation (as denoted by angles "α" and "β", shown in Figure 1) during the year so the beam of the sun rotates in pitch about the x axis and changing azimuth during the day so the beam of the sun rotates in yaw about the z axis. Critically to track the sun the plane of the array must have freedom to move so the moving beam of the sun can be continually perpendicular to it. Therefore the array has two degrees of rotational freedom but no translational degrees of freedom. This is the minimum number to track the sun.

In conventional two axis tracking systems, as shown schematically in Figure 2, there is often a second axis system located at the top of the pole with a z axis common to both the ground and to the of the pole but the x and y axes are rotated around the pole. In such systems the movement of the sun is equated to yaw about the ground z axis and pitch about the moving x axis which is rotated about the pole.

In conventional single axis trackers (not shown) one axis is chosen and the array rotated about that axis. In an elevation tracker the ground x axis is chosen and the plane of the array is pitched about it to take account of time of year. In an azimuth tracker the ground y-axis is chosen and the plane of the array is rolled about it to take account of time of day. Thus in single axis trackers the plane of the array has a single rotational degree of freedom and no translational degrees of freedom.

Mathematically for dual axis tracking the plane of the array may be moved using an alternative set of motions which are not pure rotations about these axes so long as the resulting array motion has the same two degrees of freedom that match the movement of the sun.

One example of an apparatus (or "array") 100 for solar tracking is described with reference to the accompanying drawings Figures 1 to 9.

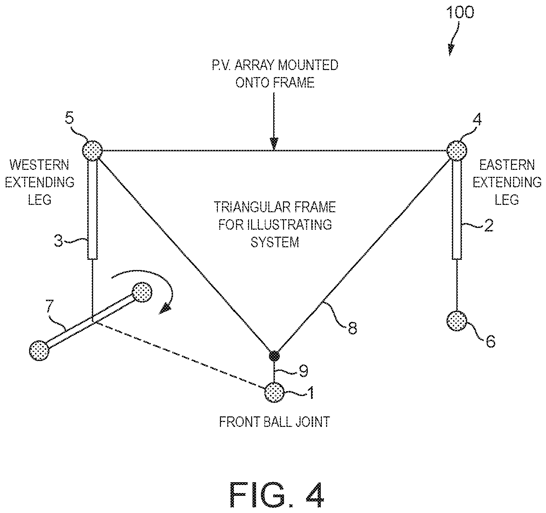

Figure 4 shows the apparatus (or "array") 100 for solar tracking according to one example of the present invention. The apparatus comprises a triangular frame (or "mount") 8 supported on a first fixed leg 9 (also referred to as a mounting point and/or the lowest point of the structure provided by the apparatus) and second and third legs 2, 3 (also referred to as rear legs), which are linearly actuable. The second and third legs 2, 3 are connected to a foundation and/or the ground at their ends that are distal to the frame (said ends also being referred to as mounting points) and to the frame at their proximal ends. The legs are attached to a foundation 10 formed of a frame of members 9 (not shown)

For stability and control of the array a minimum of three mounting points is required and so embodiments of the present invention use an adjustable three legged arrangement where the attachment to the plane of the frame 8 uses ball joints so rotation in pitch, roll and yaw is possible but no translation is allowed at the joint. The rotation of the plane of the array is achieved by translational movement of two of the legs 2, 3. The linear motion of these two legs 2, 3 is converted into rotation of the plane of the frame 8 about two axes.

The innovative design of the tracker is based on a tripod with one fixed and two extending legs 9, 2, 3 supporting the frame 8, which in turn supports a payload such as a flat array of solar panels 11 (or a single solar panel). Having a tripod configuration means that the loads from the array are spread through all three legs into the ground. Thus the structure at the array frame and the foundations needs to support only a portion of the loads compared to the conventional 2-axis trackers. An innovation is the analysis of the way all the joints of the three legs 9, 2, 3 behave together to allow tracking of the sun's elevation and azimuth.

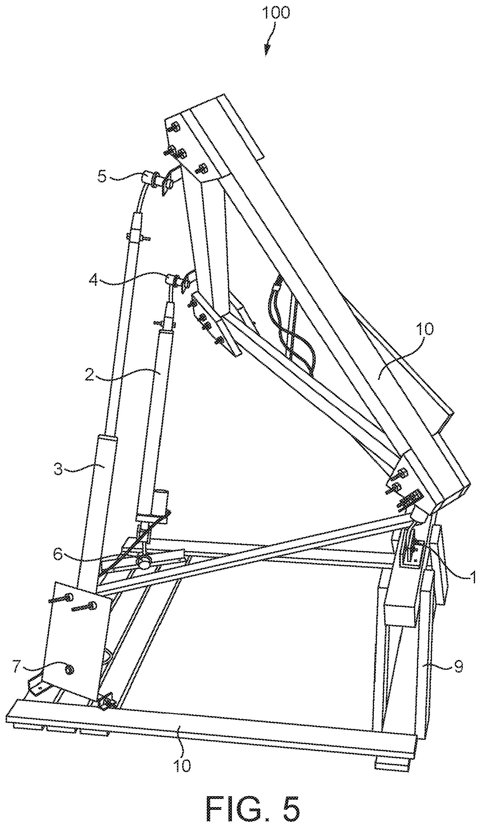

Now to control the angle of the plane of the array and hold it stable the degrees of freedom of the bottom ends of the tripod legs has required careful analysis. In the described embodiments, one of the legs 9 is fixed in length and arranged so a joint 1 to the frame 8 has no linear motion in any direction. Thus this joint 1 has solely three rotational degrees of freedom; roll, pitch and yaw (i.e. the joint 1 is a universal joint). Another of the legs 2 has a ball joint 6 at the end fixed to the ground and a further ball joint 4 at the end attached to the array. The leg 2 is extendable in length so this leg controls the height of its attachment to the frame 8 above the ground and allows three rotational degrees of freedom of the joints 6, 4 at both the ground and at the array. This allows the height of one side of the array to be controlled (as shown in Figures 5 to 8). However the system has no stability and its natural state is to fall flat to the ground. The third leg 3 is included to allow three rotational degrees of freedom at one end (via a ball joint 5 provided at the end of the leg 3 that is proximal to the frame 8) and is extendable in length but constrains the motion of the frame 8 and legs 9, 2, 3 so the system is stable by limiting the degrees of freedom of the frame 8 to rotation following the elevation and azimuth of the sun (i.e. two degrees of freedom, by rolling and pitching). This is achieved by restricting the degrees of freedom of the proximal end of this third leg 3 by having a hinge mounting 7. The axis of rotation of the hinge 7 is arranged so a line perpendicular to it runs through the point of attachment of the fixed length leg 1.

In an embodiment of the present invention, at the lowest point of the frame 8 which in the northern hemisphere will optimally face south there is a ball joint 1 allowing rotation of that end of the frame 8 about the three orthogonal axes in roll yaw and pitch but not allowing translation in any direction, except for a small amount of play. This ball joint is referred to as the front ball joint 1.

If the rear of the supporting structure is lifted by the extension of the rear legs 2, 3 then the front ball joint 1 allows elevation tracking. If one side of the rear of the supporting structure is lifted and the other lowered the front ball joint 1 allows azimuth tracking. By combining lifting of the rear and lifting one side and lowering the other side then a combination of elevation and azimuth tracking is achieved and so the sun can be tracked through the sky.

The two rear-legs 2, 3 are extendable and so can provide the motion required to lift each side of the rear independently and so track the sun. Leg 2 is referred to as the eastern leg and leg 3 is referred to as the western leg.

An innovation is to ensure that the angular motion of the frame 8 required to track the sun is possible whilst maintaining stability of the structure. This is achieved by the use of a particular arrangement of types of joints on the rear legs 2, 3.

Both of the two rear legs 2, 3 of the tripod structure have a similar ball joint at one end 4, 5 which may be either the end nearest the array 8 or the end nearest the ground. Thus these ball joints 4, 5 also allow rotation about the three orthogonal axes in roll yaw and pitch but do not allow any translation within the joint.

One of the rear legs 2 then has a second ball joint 6 at its distal end to the frame 8, also allowing rotation about the three orthogonal axis in roll yaw and pitch but not allowing any translation within the joint.

The other rear leg 3 has a joint 7 which is a hinge and can only move as rotation about the roll axis of the hinge pin, which is aligned so the line perpendicular to it passes through the front support 1. In the embodiments described by the present invention, this allows the rear legs 2, 3 to alter their angles as the structure tracks the sun but also holds the structure in a stable arrangement. The hinge 7 in the western leg 3 prevents the assembly toppling over.

Some flexibility is also required in the legs 2, 3 and in the hinge joint 7 to permit smooth motion. The joints may therefore incorporate rubber bushings and some flexibility in their structures.

The operation of the system and how it tracks the sun are described with reference to Figures 5 to 8. As shown in Figure 5, the position of the tracker at dawn in the northern hemisphere is set with the eastern leg 2 retracted to its shortest length and the western leg 3 extended to its longest extent. This rolls the frame 8 about its front ball joint 1 and also pitches the western side up and the eastern side down. The whole array 100 now faces in an easterly direction and approaching vertical with respect to the ground. When the sun appears over the horizon its beam will strike the array 8 near to perpendicular to the surface of the solar panel 11 supported on the frame 8, which is the optimum angle for energy collection.

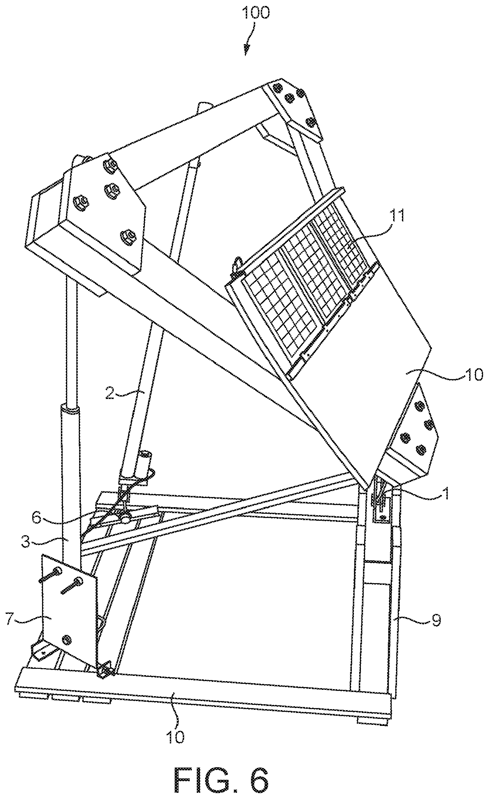

As the sun passes through the sky from east to west and as it rises up above the horizon the eastern 2 and western legs 3 are then adjusted to track the sun. Initially the eastern leg 2 is extended then the western leg 3 retracted. At midday, as shown in Figure 6, the legs 2, 3 will be extended the same amount to set the array so the sun's beam will strike the array near to perpendicular to the surface of the solar panel 11.

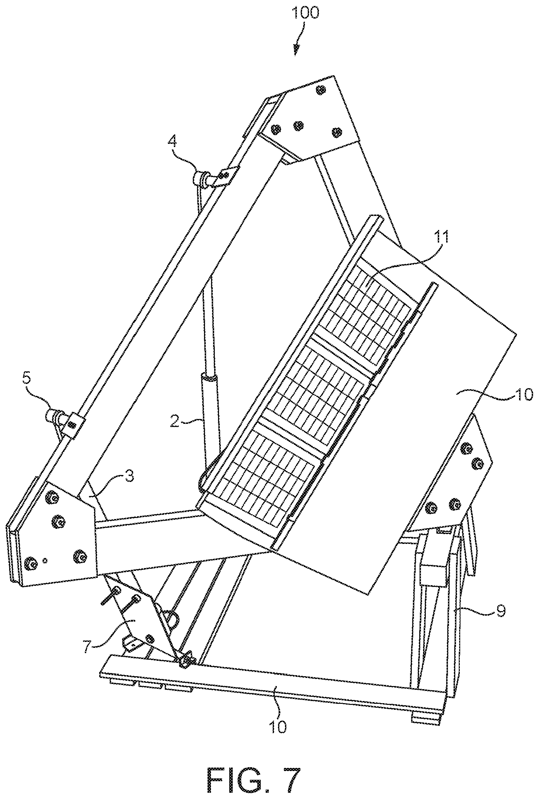

Into the afternoon, as shown in Figure 7, the eastern leg 2 is further extended and the western leg 3 retracted. The position of the tracker at sunset in the northern hemisphere is set with the western leg 3 retracted to its shortest length and the eastern leg 2 extended to its longest extent.

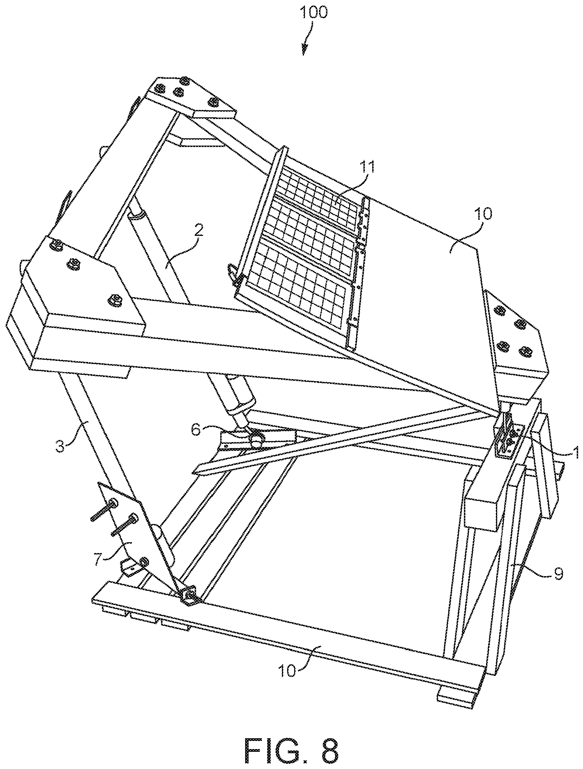

As shown in Figure 8, the extension of the rear legs 2 is varied throughout the year to track the sun's elevation. Figure 8 shows the position at midday in summer, whereas Figure 7 shows the position at midday in winter.

As shown in Figures 5 to 8, the foundation 10 is generally a simple frame formed of members. The foundation may be staked (or otherwise semi-permanently) attached to the ground to hold the array in place. Optionally the first leg 9 may be part of the foundation 10.

In an alternative, in the western leg 3 the positions of hinge 7 and the ball joint 6 are transposed such that the hinge 7 is mounted to the frame 9 which supports the array 8 and the ball joint is at the end of the western leg 3 on the ground.

In an alternative, the western and eastern legs 2, 3 may be swapped in the design.

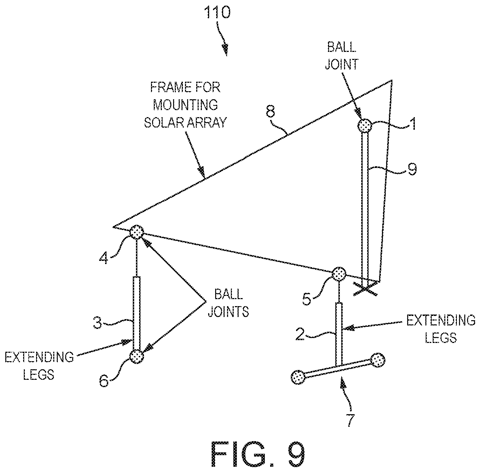

In an alternative, the extendible western and eastern legs 2, 3 and the single ball joint 1 are configured differently around the frame 8 as shown for apparatus 110 in Figure 9. The single ball joint 1 is located towards the rear, north (in the southern hemisphere) of the frame 8 such that it supports this part of the solar array higher off the ground than the front, south (in the southern hemisphere) of the frame 8. The leg 9 is fixed to the foundation at the end distal to the frame 8 such that the distal end cannot pivot relative to the foundation. The two extendible legs 2, 3 can be fitted at the front, south (in the southern hemisphere) of the frame 8 - one leg 2 towards the east and one leg 3 towards the west as for apparatus 100. One leg 3 has ball joints 4, 6 at each end and the other leg 2 has a ball joint 5 at one end and a hinge 7 at the other end - once again, as for apparatus 100.

By retracting both of the extendible legs 2, 3 the frame 8 is lowered at the front and the frame pitch angle with respect to the ground is increased and which allows following the sun lower in the sky during the winter. By extending both of the extendible legs 2, 3 the frame 8 is raised up at the front and so the frame pitch angle with respect to the ground is reduced which allows following the sun higher in the sky during the summer. By differentially extending one leg 2/3 and retracting the other leg 3/2 the frame 8 is rolled in an east to west action and so follows the sun through the sky during the day.

The configuration of the extendible legs 2, 3 and the single ball 1 joint of apparatus 110 results in a different overall scanning of the sky than for the configuration with extendible rear legs 2, 3 of apparatus 100. The impact of this is that the two configurations 100, 110 operate in different ways to gain additional solar energy as compared to a fixed array. An area of difference is how the two configurations are orientated in the morning and evening. Apparatus 100 tends to point slightly south in the morning and evening and therefore favours winter sunrise and sunset. Apparatus 110 tends to point slightly north in the morning and evening therefore favours summer sunrise and sunset. This allows for different matching of generation and demand from the alternative configurations.

A consequence of having the single ball joint 1 towards the rear, north (in the southern hemisphere) and the two extendible legs 2, 3 mounted at the front, south (in the southern hemisphere), as for apparatus 110, is that the whole system will tend to be taller. The energy gains and structural loadings are thus somewhat different to that of the previously described apparatus 100, which may be advantageous in some situations.

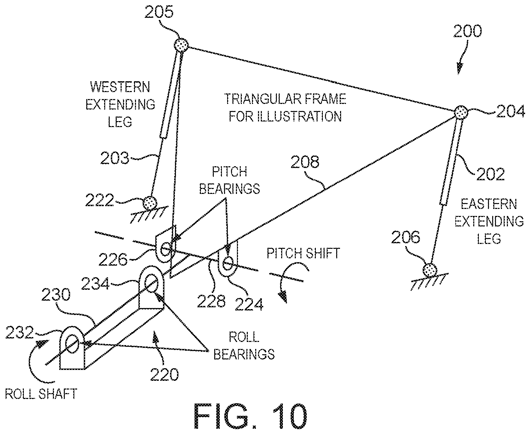

Another embodiment of an apparatus (or "array") 200 for solar tracking is described with reference to Figure 10. The apparatus 200 of this embodiment is similar to the apparatus 100 described above, and like parts are referenced by like numerals, but prefixed with '20'. Accordingly, the apparatus 200 comprises a triangular frame (or "mount") 208 supported on a first leg (comprising a roll axis and pitch axis system 220 described in further detail below) and second and third legs 202, 203 (also referred to as rear legs), which are linearly actuable. The roll axis and pitch axis system 220 replaces the leg 9 and ball joint 1 of apparatus 100 shown in Figure 4. The second and third legs 202, 203 are connected to a foundation (not shown) at their ends that are distal to the frame (said ends also being referred to as mounting points) and to the frame 208 at their proximal ends. The further elements of the apparatus 200 are identical to those of the apparatus 100 shown in Figure 4, except that the hinge 7 at the distal end of one leg is replaced by a ball joint 222.

The arrangement of joints in the apparatus 200 has been arrived at after careful analysis of the degrees of freedom of the fixing points of the tracked panels. This arrangement meets the same requirement to control the angle of the plane of the array whilst maintaining stability.

Both of the rear legs 202, 203 have ball joints 204, 206, 205, 222 at both of their respective ends. This allows free rotation around all three axes at each end of each joint but relative translation is prevented. The upper part of the frame 208 on which the panels are mounted can therefore move laterally in both north-south and east-west directions. The legs 202, 203 are extendable in length and so by extending or contracting the legs the frame 208 is moved up and down at each corner.

At the lowest point of the frame 208 which in the northern hemisphere will optimally face south, there is a more complex joint arrangement - the roll axis and pitch axis system 220. The roll axis and pitch axis system 220 comprises a pair of shafts 228, 230 fixed perpendicularly to each other, each shaft being inserted through a pair of rotary bearings - 224, 226 and 232, 234 for shafts 228, 230 respectively. The rotary bearings 224, 226 are attached to the frame 208. The bearings 224, 226 are arranged with one bearing 224 towards the east and one bearing 226 towards the west of the frame 208 with a common axis of rotation aligned east-west on the frame when it is horizontal. This allows the frame to pitch around this axis in elevation when the bearing axis is horizontal. A shaft 228 is inserted through these bearings (referred to as the "pitch" shaft below) and it allows the frame to follow the sun in azimuth when the rear legs 202, 203 are extended or retracted together.

The pitch shaft 228 is fixed perpendicular to a further shaft 230 (referred to as the "roll" shaft below) which is aligned north-south and which can rotate about this north-south axis. The roll shaft 230 is mounted in a pair of rotary bearings 232, 234 with a common axis of rotation on a mounting which is fixed with respect to the foundation (not shown). The roll shaft 230 allows the frame 208 to roll east to west to follow the sun through the day. The roll shaft 230 may be aligned with its axis horizontal or may have a slight downward angle towards the south if the apparatus 200 is located at a northern latitude. If the apparatus 200 is located at a northern latitude, this downward angle is chosen to maximise the range of tracking it can achieve with respect to the sun.

Accordingly, the system can track the sun throughout the day and seasons. For example, at (or near) dawn, by retracting the eastern leg 202 and extending the western leg 203, the frame 208 is rolled around the roll axis and pitched about the pitch axis so the frame is approximately vertical and its surface is facing an eastward direction.

In an alternative, the apparatus 200 is modified similarly to the reconfiguration between apparatuses 100 and 110 described with reference to Figure 9 above. For apparatus 200 this corresponds to mounting the pitch and roll axis system 220 towards the rear, north (in the southern hemisphere), and mounting the two extendible legs 202, 203 at the front, south (in the southern hemisphere).

In an alternative, in the roll axis and pitch axis system 220 the positions of the roll shaft 230 and the pitch shaft 228 and their respective bearings 232, 234, 224, 226 are transposed such that the bearings 224, 226 (through which the pitch shaft 228 passes) are mounted to the foundation and the bearings 232, 234 (through which the roll shaft 230 passes) are mounted to the frame 208.

In an alternative, no frame is used as the foundation 10, and the distal ends of each of the legs are simply staked (or otherwise attached) to the ground. In such an implementation, the ground itself is the "foundation" as described herein. Or, if the system is to be mounted on a roof of a building, the distal ends of each of the legs are simply bolted (or otherwise attached) onto the structure of the roof, and the roof itself is the "foundation" as described herein.

The design innovation ensures that the angular motion of the frame 8/208 required to track the sun is controlled but at the same time spreads the loads through three mounting legs 9, 2, 3 for apparatus 100, or 220, 202 and 203 for apparatus 200.

The control of the array 8/208 has been simplified and made more reliable. The control to determine the extension of the two legs 2/202, 3/203 may be by electronic control system which may operate electric motors driving screws chains, rack and pinion mechanisms and so on or other systems including hydraulic or pneumatic mechanism could be used.

The determination of the angle may be simpler relative to known systems and may use a time clock and a pre-set table of positions for each time of day and day of year for the location of the array 100/200 for best angle to the sun. The position of the frame 8/208 may be determined by using angle sensors so that the control system can extend the legs 2/202, 3/203 until the array 100/200 is at the desired angle.

In use, the apparatus 100/200 may be provided as part of an installation formed of many such apparatus 100/200.

It will be understood that the invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. Apparatus (200) for solar tracking, the apparatus comprising:
a mount (208) for a payload; and
at least three legs (202, 203, 220) for supporting the mount (208) above a foundation;
wherein one of the legs (220) is connected to the mount (208) via two hinge joints (228, 230); and
wherein at least two of the legs (202, 203) are linearly actuable such that, in use, the mount (208) is capable of pivoting about at least two axes relative to the foundation;
**characterized in that** all the legs (202, 203, 220) are connected to the mount (208) at edges of the mount (208) and **in that** and the legs are spread around the mount thereby to spread the load of the mount (208).

2. An apparatus according to Claim 1, wherein the legs (202, 203, 220) are connected to the mount (208) via pivoting joints.

3. An apparatus (200) according to any preceding claim, wherein at least some of the legs (202, 203, 220) are connected to the mount (208) via ball joints; preferably wherein the linearly actuable legs (202, 203) are connected both to the mount (208) and to the foundation via ball joints.

4. An apparatus (200) according to any preceding claim, wherein the at least three legs (202, 203, 220) consist of three legs, wherein two of the legs (202, 203) are linearly actuable; preferably wherein one of the legs (220) is of fixed length.

5. An apparatus (200) according to any preceding claim, wherein pivoting of a first hinge joint (228) of the two hinge joints causes the mount to pitch; and pivoting of a second hinge joint (230) of the two hinge joints causes the mount to roll.

6. An apparatus (200) according to any preceding claim, wherein the two hinge joints (228, 230) comprise a first rotatable shaft (228) and a second rotatable shaft (230) respectively; wherein the first and second shafts are arranged such that the first shaft is perpendicular to the second shaft; preferably wherein the first and second shaft are connected.

7. An apparatus (200) according to any preceding claim, wherein the linearly actuable legs (202, 203) are telescoping; preferably wherein the linearly actuable legs comprise telescopic cylinders.

8. An apparatus (200) according to any preceding claim, further comprising at least one actuator for actuating the linearly actuable legs; the apparatus preferably further comprising a controller for controlling the at least one actuator thereby to track the sun; more preferably wherein the controller comprises at least one of: a clock and a memory storing information relating to the position of the sun in relation to the time of day (and optionally the time of year); and a clock and a computer program in memory for predicting the position of the sun in relation to the time of day (and optionally the time of year).

9. An apparatus (200) according to any preceding claim, further comprising a foundation; preferably wherein the foundation is configured to be fixed to the ground via fixings being driven into the ground, more preferably wherein said fixings are stakes; and/or wherein the foundation comprises a frame formed of members.

10. An apparatus (200) according to any preceding claim, wherein the legs (202, 203, 220) are arranged in a triangular formation on the mount (208).

11. An apparatus (200) according to any preceding claim, wherein all of the legs (202, 203, 220) are weight-bearing; and/or wherein the apparatus (200) does not include a support under the centre of the mount (208).

12. An apparatus (200) according to any preceding claim, wherein at least one leg (202, 203, 220) extends beyond the footprint of the mount (208).

13. An apparatus (200) according to any preceding claim, wherein, relative to the foundation, the mount (208) is capable of pivoting: about one of the legs (202, 203, 220), and/or about two axes, preferably wherein, relative to the foundation, the mount (208) is capable of pitching thereby to track the elevation of the sun, and rolling thereby to track the azimuth of the sun.

14. An apparatus according to any preceding claim, wherein the apparatus is formed of a plurality of members which are fixed together.

15. A system for solar tracking, comprising the apparatus (200) of any preceding claim; and a solar panel supported as a payload on the mount (208).

## Patentansprüche

1. Vorrichtung (200) zur Solarverfolgung, wobei die Vorrichtung Folgendes umfasst:
eine Befestigung (208) für eine Nutzlast; und
mindestens drei Beine (202, 203, 220) zum Stützen der Befestigung (208) über einem Fundament;
wobei eines der Beine (220) mit der Befestigung (208) über zwei Scharniergelenke (228, 230) verbunden ist; und
wobei mindestens zwei der Beine (202, 203) linear betätigbar sind, sodass sich bei Verwendung die Befestigung (208) um mindestens zwei Achsen relativ zu dem Fundament drehen kann;
**dadurch gekennzeichnet, dass** alle drei Beine (202, 203, 220) mit der Befestigung (208) an Kanten der Befestigung (208) verbunden sind, und dadurch, dass die Beine um die Befestigung herum verteilt sind, um dadurch die Last der Befestigung (208) zu verteilen.

2. Eine Vorrichtung gemäß Anspruch 1, wobei die Beine (202, 203, 220) mit der Befestigung (208) über Drehgelenke verbunden sind.

3. Eine Vorrichtung (200) gemäß einem vorhergehenden Anspruch, wobei mindestens einige der Beine (202, 203, 220) mit der Befestigung (208) über Kugelgelenke verbunden sind; wobei bevorzugt die linear betätigbaren Beine (202, 203) sowohl mit der Befestigung (208) als auch mit dem Fundament über Kugelgelenke verbunden sind.

4. Eine Vorrichtung (200) gemäß einem vorhergehenden Anspruch, wobei mindestens drei Beine (202, 203, 220) aus drei Beinen bestehen, wobei zwei der Beine (202, 203) linear betätigbar sind; wobei eines der Beine (220) von fixer Länge ist.

5. Eine Vorrichtung (200) gemäß einem vorhergehenden Anspruch, wobei das Drehen eines ersten Scharniergelenks (228) der zwei Scharniergelenke ein Nicken der Befestigung verursacht; und das Drehen eines zweiten Scharniergelenks (230) der zwei Scharniergelenke ein Rollen der Befestigung verursacht.

6. Eine Vorrichtung (200) gemäß einem vorhergehenden Anspruch, wobei die zwei Scharniergelenke (228, 230) eine erste rotierbare Welle (228) bzw. eine zweite rotierbare Welle (230) umfassen; wobei die erste und zweite rotierbare Welle so angeordnet sind, dass die erste Welle zur zweiten Welle senkrecht ist; wobei bevorzugt die erste und zweite Welle verbunden sind.

7. Eine Vorrichtung (200) gemäß einem vorhergehenden Anspruch, wobei die linear betätigbaren Beine (202, 203) teleskopieren; wobei bevorzugt die linear betätigbaren Beine Teleskopzylinder umfassen.

8. Eine Vorrichtung (200) gemäß einem vorhergehenden Anspruch, die ferner mindestens eine Betätigungseinrichtung zum Betätigen der linear betätigbaren Beine umfasst; wobei bevorzugt die Vorrichtung ferner eine Steuereinheit zum Steuern der mindestens einen Betätigungseinrichtung umfasst, um dadurch die Sonne zu verfolgen; wobei bevorzugter die Steuereinheit mindestens eines von Folgenden umfasst: eine Uhr und einen Speicher, der Informationen bezüglich der Stellung der Sonne in Bezug auf die Tageszeit (optional die Jahreszeit) speichert; und eine Uhr und ein Computerprogramm im Speicher zum Vorhersagen der Stellung der Sonne in Bezug auf die Tageszeit (und optional die Jahreszeit).

9. Eine Vorrichtung (200) gemäß einem vorhergehenden Anspruch, die ferner ein Fundament umfasst; wobei bevorzugt das Fundament dazu konfiguriert ist, über in den Boden getriebene Fixierungen am Boden fixiert zu werden, wobei bevorzugter die genannten Fixierungen Pflöcke sind;
und/oder wobei das Fundament einen aus Gliedern gebildeten Rahmen umfasst.

10. Eine Vorrichtung (200) gemäß einem vorhergehenden Anspruch, wobei die Beine (202, 203, 220) in einer dreieckigen Formation auf der Befestigung (208) angeordnet sind.

11. Eine Vorrichtung (200) gemäß einem vorhergehenden Anspruch, wobei alle Beine (202, 203, 220) gewichttragend sind; und/oder wobei die Vorrichtung (200) keine Stütze unter der Mitte der Befestigung (208) beinhaltet.

12. Eine Vorrichtung (200) gemäß einem vorhergehenden Anspruch, wobei sich mindestens ein Bein (202, 203, 220) über die Abmessung der Befestigung (208) hinaus erstreckt.

13. Eine Vorrichtung (200) gemäß einem vorhergehenden Anspruch, wobei, relativ zu dem Fundament, sich die Befestigung (208) um Folgendes drehen kann: eines der Beine (202, 203, 220), und/oder um zwei Achsen, wobei bevorzugt, relativ zu dem Fundament, die Befestigung (208) nicken kann, um dadurch die Elevation der Sonne zu verfolgen, und rollen kann, um dadurch den Azimut der Sonne zu verfolgen.

14. Eine Vorrichtung gemäß einem vorhergehenden Anspruch, wobei die Vorrichtung aus einer Vielzahl von Gliedern gebildet ist, die miteinander fixiert.

15. Ein System zur Solarverfolgung, umfassend die Vorrichtung (200) nach einem vorhergehenden Anspruch; und ein auf der Befestigung (208) als Nutzlast gestütztes Solarmodul.

## Revendications

1. Appareil (200) de poursuite solaire, l'appareil comprenant :
une monture (208) pour une charge utile ; et
au moins trois pieds (202, 203, 220) pour supporter la monture (208) au-dessus d'une fondation ;
dans lequel l'un des pieds (220) est relié à la monture (208) par l'intermédiaire de deux articulations à charnière (228, 230) ; et
dans lequel au moins deux des pieds (202, 203) sont actionnables linéairement de sorte que, en utilisation, la monture (208) est apte à pivoter autour d'au moins deux axes par rapport à la fondation ;
**caractérisé en ce que** tous les pieds (202, 203, 220) sont reliés à la monture (208) au niveau de bords de la monture (208) et **en ce que** les pieds sont répartis autour de la monture pour ainsi répartir la charge de la monture (208) .

2. Appareil selon la revendication 1, dans lequel les pieds (202, 203, 220) sont reliés à la monture (208) par l'intermédiaire d'articulations pivotantes.

3. Appareil (200) selon l'une quelconque des revendications précédentes, dans lequel au moins certains des pieds (202, 203, 220) sont reliés à la monture (208) par l'intermédiaire de rotules ; de préférence dans lequel les pieds actionnables linéairement (202, 203) sont reliés à la fois à la monture (208) et à la fondation par l'intermédiaire de rotules.

4. Appareil (200) selon l'une quelconque des revendications précédentes, dans lequel les au moins trois pieds (202, 203, 220) consistent en trois pieds, dans lequel deux des pieds (202, 203) sont actionnables linéairement ; de préférence dans lequel l'un des pieds (220) est de longueur fixe.

5. Appareil (200) selon l'une quelconque des revendications précédentes, dans lequel le pivotement d'une première articulation à charnière (228) des deux articulations à charnière amène la monture à tanguer ; et le pivotement d'une seconde articulation à charnière (230) des deux articulations à charnière fait rouler la monture.

6. Appareil (200) selon l'une quelconque des revendications précédentes, dans lequel les deux articulations à charnière (228, 230) comprennent respectivement un premier arbre rotatif (228) et un second arbre rotatif (230) ; dans lequel les premier et second arbres sont agencés de sorte que le premier arbre est perpendiculaire au second arbre ; de préférence dans lequel le premier et le second arbre sont reliés.

7. Appareil (200) selon l'une quelconque des revendications précédentes, dans lequel les pieds actionnables linéairement (202, 203) sont télescopiques ; de préférence dans lequel les pieds actionnables linéairement comprennent des vérins télescopiques.

8. Appareil (200) selon l'une quelconque des revendications précédentes, comprenant en outre au moins un actionneur pour actionner les pieds actionnables linéairement ; l'appareil comprenant en outre de préférence un contrôleur pour commander l'au moins un actionneur pour ainsi suivre le soleil ; plus préférablement dans lequel le contrôleur comprend au moins l'un parmi : une horloge et une mémoire stockant des informations relatives à la position du soleil par rapport à l'heure du jour (et éventuellement le moment de l'année) ; et une horloge et un programme informatique en mémoire pour prédire la position du soleil par rapport à l'heure du jour (et éventuellement le moment de l'année).

9. Appareil (200) selon l'une quelconque des revendications précédentes, comprenant en outre une fondation ; de préférence dans lequel la fondation est conçue pour être fixée au sol par l'intermédiaire de fixations enfoncées dans le sol, plus préférablement dans lequel lesdites fixations sont des piquets ;
et/ou dans lequel la fondation comprend un cadre formé d'éléments.

10. Appareil (200) selon l'une quelconque des revendications précédentes, dans lequel les pieds (202, 203, 220) sont agencés en une formation triangulaire sur la monture (208).

11. Appareil (200) selon l'une quelconque des revendications précédentes, dans lequel tous les pieds (202, 203, 220) sont porteurs ; et/ou dans lequel l'appareil (200) ne comporte pas de support sous le centre de la monture (208).

12. Appareil (200) selon l'une quelconque des revendications précédentes, dans lequel au moins un pied (202, 203, 220) s'étend au-delà de l'empreinte de la monture (208).

13. Appareil (200) selon l'une quelconque des revendications précédentes, dans lequel, par rapport à la fondation, la monture (208) est apte à pivoter autour d'un des pieds (202, 203, 220), et/ou autour de deux axes, de préférence dans lequel, par rapport à la fondation, la monture (208) est apte à tanguer pour ainsi suivre l'élévation du soleil, et à rouler pour ainsi suivre l'azimut du soleil.

14. Appareil selon l'une quelconque des revendications précédentes, dans lequel l'appareil est formé d'une pluralité d'éléments qui sont fixés ensemble.

15. Système de poursuite solaire, comprenant l'appareil (200) selon l'une quelconque des revendications précédentes ; et un panneau solaire supporté en tant que charge utile sur la monture (208).
